Europäisches Patentamt

European Patent Office

Office européen des brevets

(19)

(11) Veröffentlichungsnummer: **0 029 197**
**A1**

# (12) EUROPÄISCHE PATENTANMELDUNG

(21) Anmeldenummer: 80106926.1

(22) Anmeldetag: 10.11.80

(51) Int. Cl.³: **G 05 D 23/19, F 24 H 1/10**

(30) Priorität: 09.11.79 DE 2945307

(43) Veröffentlichungstag der Anmeldung: 27.05.81
Patentblatt 81/21

(84) Benannte Vertragsstaaten: **AT BE CH GB LI**

(71) Anmelder: **Forbach GmbH & Co. KG, Postfach 1320, D-8740 Bad Neustadt/Saale (DE)**

(72) Erfinder: **Böckeler, Dieter, Ing. (grad.), Bache 10, D-4788 Warstein 1 (DE)**

(74) Vertreter: **Vogl, Leo, Dipl.-Ing., AEG-TELEFUNKEN Konsumgüter AG Abteilung Patente Muggenhofer Strasse 135, D-8500 Nürnberg (DE)**

(54) **Einrichtung zur Folgesteuerung einer einem fliessenden Medium zugeführten Heizleistung.**

(57) Die Erfindung betrifft eine Einrichtung zur Folgesteuerung einer einem fliessenden Medium zugeführten Heizleistung in Abhängigkeit von einer wählbar vorzugebenden Durchflussmenge des Mediums zur Einstellung einer gewünschten Temperatur, mit einem die Durchflussmenge erfassenden hydraulisch-elektrischen Wandler und einem (elektrisch) nachgeordneten Impulsgeber, dessen erzeugte Impulse zu elektrischen Steuerbefehlen für die Steuerung der Heizleistung verarbeitet werden und besteht darin, dass der Impulsgeber ein Signal mit einer der Durchflussmenge entsprechenden Periodendauer erzeugt, durch das als Eingangssignal eine erste monostabile Kippstufe eines Signalauswerters angesteuert wird, die einen jeweils mit einer hinteren Flanke des Eingangssignals beginnenden Rechteckimpuls mit festgelegter kurzer Impulsdauer erzeugt, durch den eine zweite und eine dritte, je retriggerbare, monostabile Kippstufe getriggert werden, welche unterschiedlich lange Rückkippzeiten haben und jeweils wiederum mit der hinteren Flanke des Rechteckimpulses beginnend, rechteckförmige Signale mit entsprechender Signaldauer erzeugen, die den zwei elektronischen Speichern des Dual-Speichers über dessen Eingänge getrennt zugeführt sind und durch die vordere Impulsflanke des Rechteckimpulses für die Dauer einer Periode gespeichert werden, während durch das Signal der Kippstufe mit der längeren Rückkippzeit bei einer Periodendauer eine vierte monostabile Kippstufe des Impulssignal-Auswerters getriggert wird, die einen mit der hinteren Flanke des Signals beginnenden kurzen Rechteckimpuls erzeugt, der einem gemeinsamen Rücksetzeingang der elektronischen Speicher zugeführt ist, und dass die Speicher Ausgangssignale erzeugen, die jedes für sich durch Verstärker in elektrische Steuerbefehle umgewandelt werden.

Forbach GmbH & Co. KG

Fo 25      8740 Bad Neustadt/Saale     06.11.80
Vg/Sp

Einrichtung zur Folgesteuerung einer einem fließenden
Medium zugeführten Heizleistung

Die Erfindung betrifft eine Einrichtung mit den im Oberbegriff des Patentanspruchs angegebenen Merkmalen zur
Folgesteuerung einer einem strömenden Medium zugeführten
Heizleistung in Abhängigkeit von einer wählbar vorzugebenden Durchflußmenge des Mediums zur Einstellung einer
gewünschten Temperatur, mit einem die Durchflußmenge erfassenden hydraulisch-elektrischen Wandler und einem
(elektrisch) nachgeordneten Impulsgeber, dessen erzeugte
Impulse zu elektrischen Schaltbefehlen für die Steuerung
der Heizleistung verarbeitet werden.

Eine derartige Einrichtung entspricht dem Gegenstand der
deutschen Patentanmeldung P 28 47 018.0, in der eine Einrichtung mit den oben angegebenen Merkmalen in den Grundzügen offenbart ist. Sie bezieht sich auf einen Durchlauferhitzer mit einer im Wasserkreislauf angeordneten
strömungsabhängigen Steuereinrichtung zum Steuern der

-/-

Energiezufuhr für eine Heizeinrichtung. Der als strömungsabhängige Steuereinrichtung bezeichnete Teil der Einrichtung besteht aus einem vom Wasserstrom angetriebenen Turbinenrad, mit dem ein Frequenzgeber zusammenwirkt. Die hiervon abgehende Frequenz dient als Größe zum durchlaufabhängigen Schalten einer mechanischen, elektrischen oder elektronischen, die Heizleistung steuernden Vorrichtung.

Von diesen Bestandteilen (der Einrichtung nach Patentanmeldung P 28 47 018.0) sind das vom Wasserstrom angetriebene Turbinenrad und der damit zusammenwirkende Frequenzgeber bei der eingangs beschriebenen Einrichtung unter dem Begriff "hydraulisch-elektrischer Wandler mit nachgeordnetem Impulsgeber" und von den weiteren Merkmalen der Einrichtung nach P 28 47 018.0 das Funktionsmerkmal - Frequenz (des Frequenzgebers) dient zum Schalten einer die Heizleistung steuernden Vorrichtung - unter dem Begriff "Impulse (des Impulsgebers) werden zu elektrischen Schaltbefehlen für die Steuerung der Heizleistung verarbeitet" zusammengefaßt.

In der erwähnten Patentanmeldung P 28 47 018.0 ist nicht eine bestimmte Lösung für die Verarbeitung von Impulsen eines Frequenzgebers angegeben, dessen Frequenz als Größe zum durchlaufabhängigen Schalten einer z.B. mechanischen, die Heizleistung steuernden Einrichtung dient.

Es stellt sich mithin die Aufgabe, die der Erfindung zugrunde liegt, einen Impulsgeber für eine Einrichtung der eingangs angegebenen Art, der über einen hydraulisch-elektrischen Wandler von der Durchflußmenge eines strömenden Mediums auf Abgabe einer hiervon abhängigen Frequenz gesteuert wird, derart weiter auszubilden und eine Elektronik dafür zu schaffen, daß sich die Impulse des Impulsgebers mit Hilfe der Elektronik zu elektrischen

-/-

-3-

Steuerbefehlen für die Steuerung der Heizleistung nach der Durchflußmenge verarbeiten lassen.

Diese Aufgabe wird erfindungsgemäß durch die im Patentanspruch gekennzeichneten Merkmale gelöst, und zwar dadurch, daß der Impulsgeber ein Signal mit einer der Durchflußmenge entsprechenden Periodendauer erzeugt, durch das als Eingangssignal eine erste monostabile Kippstufe eines Impulssignal-Auswerters angesteuert wird, die einen jeweils mit einer hinteren Flanke des Eingangssignals beginnenden Rechteckimpuls mit festgelegter kurzer Impulsdauer erzeugt, durch den eine zweite und eine dritte, je retriggerbare, momostabile Kippstufe getriggert werden, deren Ausgangszustand in elektronischen Speichern, aus einem Dual-Flip-Flop bestehend, eingelesen werden, welche zwei Kippstufen unterschiedlich lange Rückkippzeiten haben und, jeweils wiederum mit der hinteren Flanke des Rechteckimpulses beginnend, rechteckförmige Signale mit entsprechender Signaldauer erzeugen, die Dateneingängen elektronischer Speicher zugeführt sind und durch die vordere Impulsflanke des Rechteckimpulses für die Dauer einer Periode des Eingangssignals gespeichert werden, während durch das Signal der Kippstufe mit der längeren Rückkippzeit eine vierte monostabile Kippstufe des Impulssignal-Auswerters getriggert wird, die einen mit der hinteren Flanke des Signals beginnenden kurzen Rechteckimpuls erzeugt, der einem gemeinsamen Rücksetzeingang der elektronischen Speicher zugeführt ist, und daß die Speicher Ausgangssignale erzeugen, die jeder für sich durch Verstärker in elektrische Steuerbefehle umgewandelt werden.

Bei einer Einrichtung der eingangs beschriebenen Art, die die obigen, im Patentanspruch gekennzeichneten Merkmale aufweist, wird im Betrieb der Folgesteuerung der einem strömenden Medium zugeführten Heizleistung das von einem

-/-

Durchflußmengen-Impulsgeber erzeugte Signal als Eingangssignal des Signalauswerters dem Triggereingang der ersten Kippstufe zugeführt. Mittels dieser Auswerteelektronik werden die elektrischen Steuerbefehle zur Betätigung von z.B. mechanischen Leistungsschützen, mit denen die Heizleistung geschaltet wird, jeweils nach dem Abstand von zwei nacheinander folgenden Signalen erzeugt, die zeitlich so ausgewertet werden, daß bei vorgegebenem Wert der Durchflußmenge des Mediums dessen zugeführte elektrische Leistung einer gewünschten Temperatur entspricht. Die Auswerterelektronik weist eine Schalthysterese auf, wodurch ein zeitliches Hin- und Hergehen der Steuerbefehle bei schwankender Durchflußmenge des Mediums verhindert wird. Die Heizleistung ist unabhängig vom hydraulischen Druck des Mediums steuerbar.

In der Zeichnung ist ein Ausführungsbeispiel der Erfindung dargestellt, das nachstehend beschrieben ist:

Fig. 1    zeigt ein Blockschaltbild eines Signal-Auswerters;

Fig. 2    zeigt zur Erläuterung der Wirkungsweise des Signal-Auswerters nach Fig. 1 sieben Zeitdiagramme von Impulssignalen.

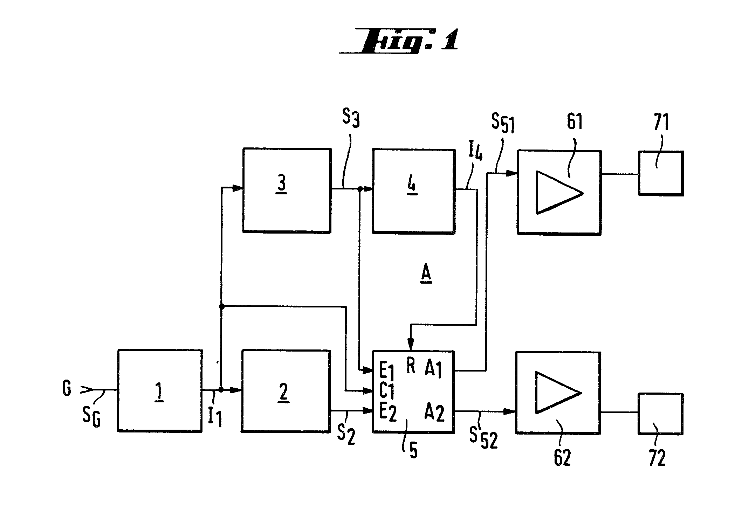

Im folgenden wird zuerst auf die Fig. 1 Bezug genommen, in der ein erfindungsgemäß ausgebildeter Signal-Auswerter als einBestandteil einer Einrichtung zur Folgesteuerung einer elektrisch erzeugten Heizleistung mit A bezeichnet ist. Die Heizleistung wird mittels einer Heizwendel, z.B. einer in einem Heizrohr durchlaufenden Menge Fließwasser, zugeführt und soll in Abhängigkeit von der Durchflußmenge des Wassers, die wählbar vorgegeben werden kann, gesteuert werden, beispielsweise um die Temperatur des durch eine Dusche über eine Leitung aus dem Heizrohr herausfließenden Wassers auf einem gewünschten Wert zu halten. Die Durch-

-/-

flußmenge wird mit Hilfe eines Hydraulisch-elektrischen Wandlers, z.B. mit Hilfe eines durch die Strömung des Fließwassers angetriebenen, vor oder hinter dem Heizrohr angeordneten Turbinenrades erfaßt, durch das ein Impulsgeber G betrieben wird, der ein Spannungssignal $S_G$ erzeugt.

Der Signal-Auswerter A hat einen Signaleingang und zwei Signalausgänge und besteht aus vier monostabilen Kippstufen 1, 2, 3, 4 und einem elektronischen Dual-Speicher 5, zusammengesetzt aus zwei miteinander verknüpften Flip-Flop-Kreisen, welche zwei Speicherteile bilden. Alle Bestandteile sind miteinander in der im Patentanspruch gekennzeichneten und in der Fig. 1 gezeigten Weise verknüpft. Den Signaleingang bildet der Triggereingang der monostabilen Kippstufe 1; diesem wird das Signal $S_G$ zugeführt. Die zwei Signalausgänge (A1; A2) von A sind die Ausgänge des Dual-Speichers 5, die voneinander unabhängig sind. Es sind die an den zwei Signalausgängen von A gebildeten Ausgangssignale $S_{51}$, $S_{52}$, jedes für sich je einem Verstärker 61 bzw. 62 zugeführt, durch die sie in elektrische Steuerbefehle umgewandelt werden. Die Steuerbefehle sind zwei Steuerspulen 71, 72 zugeführt, die zwei mechanischen Schaltschützen zugeordnet sind, mit denen die elektrische Heizleistung mittels zweier parallel verzweigter Heizstufen geschaltet wird. In den Heizstufen können eine oder mehrere Heizwendel mit je einem Schaltschütz in Reihenschaltung angeordnet werden.

Die Wirkungsweise des Signal-Auswerters A ist die folgende:

Im Betrieb der Folgesteuerung der elektrischen Heizleistung nach einer jeweils vorgegebenen Durchflußmenge bei einem Wasserdurchlauferhitzer werden mittels eines in der Fig. 1 nicht dargestellten Impulsgebers G, der mit einem den Istwert der Durchflußmenge erfassenden hydroelektrischen Wandler zu-sammenwirkt, Spannungssignale $S_G$ mit einer von dem

-6-

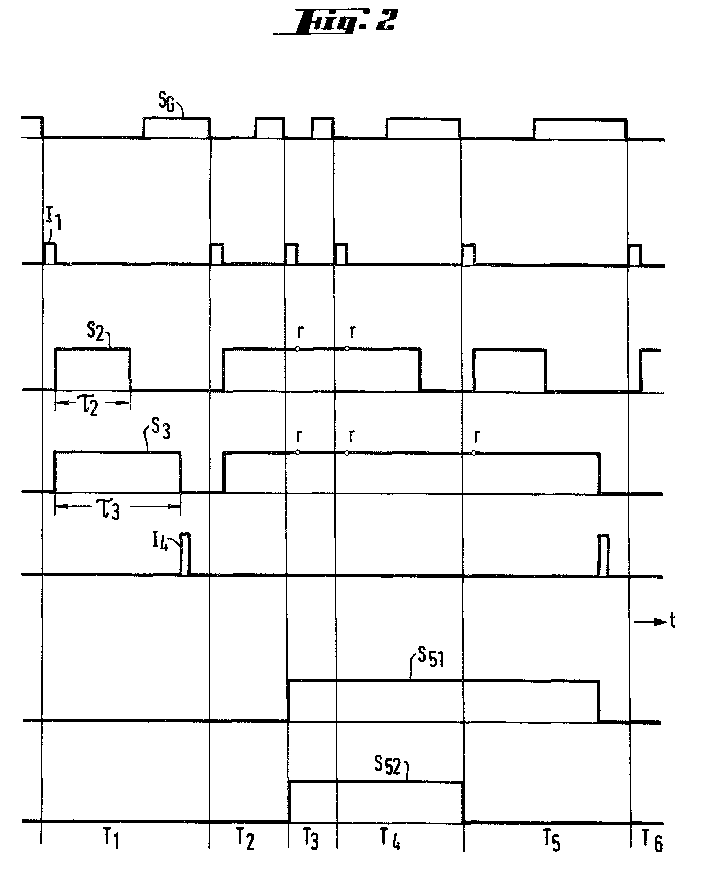

Istwert der Durchflußmenge abhängigen Periodendauer erzeugt. Die Signale $S_G$ werden durch die erste monostabile Kippstufe 1 des Signal-Auswerters A in kurze Rechteckimpulse $I_1$ mit festgelegter Impulsdauer umgeformt. Die Zeitdiagramme der Fig. 2 erstrecken sich über sechs unterschiedlich lange Abschnitte $T_1$ bis $T_6$, die jeweils eine nach der Durchflußmenge sich ergebende Signalperiode lang sind und die lückenlos nacheinander folgen. Die Rechteckimpulse $I_1$ der Kippstufe 1 beginnen jeweils mit einer hinteren Flanke der Signale $S_G$. Durch einen jeden Rechteckimpuls werden, jeweils mit seiner hinteren Impulsflanke, die zweite und dritte monostabile Kippstufe 2 und 3 getriggert, und kurz zuvor, mit der vorderen Impulsflanke von $I_1$, wird der Rechteckimpuls als Taktsignal dem Takteingang Cl des Dual-Speichers 5 zugeführt. Durch die Kippstufen 2 und 3 werden, ihren unterschiedlichen Rückkippzeiten $\tau_2$ und $\tau_3$ entsprechend, verschieden lange, rechteckförmige Signale $S_2$ und $S_3$ erzeugt, so daß $S_3$ länger als $S_2$ wird. Sie Signale $S_2$ und $S_3$ sind den zwei Dateneingängen $E_1$, $E_2$ der elektronischen Speicher von 5 als Signalpegel zugeführt, das Signal $S_3$ ist gesondert dem Triggereingang der vierten monostabilen Kippstufe 4 zugeführt. Der Dual-Speicher 5 wird beim Eintreffen der vorderen Impulsflanke von $I_1$ "gesetzt". Damit werden die beim Eintreffen von $I_1$ bestehenden Signalpegel von $S_2$ und $S_3$ abgefragt und gespeichert, bis bei Eintreffen der nächsten Impulsflanke diese Signalpegel erneut abgefragt werden. Durch die Kippstufe 4 wird, wenn die Signalperiode von $S_G$ länger als die Rückkippzeit $\tau_3$ von Kippstufe 3 ist, ein mit der hinteren Impulsflanke von $S_3$ beginnender kurzer Impuls $I_4$ erzeugt, wodurch mit der vorderen Flanke von $I_4$ der Dual-Speicher 5 über den Rücksetzeingang R rückgesetzt werden kann (reset). Somit beginnt die zeitliche Auswertung mit der vorderen Flanke eines Takt- oder Impulssignals $I_1$ und endet max. mit dem Rücksetzimpuls $I_4$; die Erfassung einer Durchfluß-

-/-

änderung dauert minimal eine Periode von $I_1$ bzw. $S_G$. Hingegen bestimmt die Rückfallzeit $\tau_3$ der Kippstufe 3 die maximale zeitliche Auswertung, wie z.B. bei Abschaltung des Wasserdurchflusses.

Derart ausgebildet, bewirkt der Signal-Auswerter A, wie in Fig. 2 zu sehen ist, daß im Zeitabschnitt T1 und in jedem folgenden Zeitabschnitt T2, T3 ... T5 jeweils durch ein Taktsignal $I_1$ mit seiner hinteren Flanke die zeitlich unterschiedlich langen Signale $S_2$ und $S_3$ erzeugt werden oder durch Retriggerung (s.r), z.B. nach dem Beginn der Zeitabschnitte $T_3$ und $T_4$, erneut erzeugt werden. Im ersten Fall besteht beim Eintreffen von $I_1$ jeweils noch kein Signal $S_2$ oder $S_3$, so daß die Dateneingänge E1, E2 von 5 jeweils Nullpegel von $S_2$, $S_3$ erfassen, die dannin den Speicher 5 übernommen werden. Das ist an dem Fehlen der Ausgangssignale $S_{51}$, $S_{52}$ in $T_1$, $T_2$ bzw. nur an $S_{52}$ in $T_5$ erkennbar. In den Zeitabschnitten $T_1$ und $T_2$ bestehen beim Eintreffen von $I_1$ die Signalpegel von $S_2$ und $S_3$ nicht bzw. nicht mehr und bestehen zu Beginn von $T_3$ und $T_4$ weiterhin, zu Beginn von $T_5$ hingegen besteht nur $S_3$ weiterhin. Die Signalpegel von $S_2$ und $S_3$ werden dabei in dem Speicher 5 bei der vorderen Flanke von $I_1$ gespeichert. In den Zeitabschnitten $T_1$ und $T_2$ werden erst am Ende eines Taktimpulses $I_1$ die Signale $S_2$ und $S_3$ erzeugt und daher nicht in den Speicher 5 übernommen. Trifft dann der nächste Taktimpuls $I_1$ ein, so sind die monostabilen Kippstufen 2 und 3 in ihre Ausgangslage zurückgefallen und bewirken keine Änderung der Ausgangssignale des Speichers 5.

Im Zeitabschnitt $T_2$ ist die Periodendauer von $S_G$ kleiner als die Rückfallzeit der Kippstufen 2 und 3. Beim Eintreffen der nächstfolgenden vorderen Impulsflanke von $I_1$ und der hinteren Impulsflanke von $S_G$ werden die Signalpegel $S_2$,$S_3$ an den Ausgängen der Kippstufen 2 u.3 im Speicner 5 gespeichert, während mit der hinteren Flanke des Taktimpulses $I_1$ die Kippstufen 2 und 3 "regetriggert" werden.

Dagegen werden im Zeitabschnitt $T_3$ die retriggerbaren Kippstufen 2 und 3 durch das Taktsignal (Rechteckimpuls $I_1$) bei r erneut getriggert, so daß der Speicher 5 beim Eintreffen des Taktsignals $I_1$ erneut gesetzt wird. Da $S_2$ und $S_3$ gleiche Signalpegel wie in $T_2$ haben, werden erstmals die Ausgangssignale $S_{51}$, $S_{52}$ erzeugt. Da $T_3$ noch kürzer als $\tau_3$ ist, kann auch hier kein Rücksetzimpuls durch die Kippstufe 4 gebildet werden.

Im Zeitabschnitt $T_4$, der länger als das kürzere Signal $S_2$ ($\tau_2$) und kürzer als das längere Signal $S_3$ ($\tau_3$) ist, werden die Kippstufen 2 und 3 wiederum (bei r) neu angetriggert, wodurch die Ausgangssignale $S_{51}$, $S_{52}$ weiterhin bestehen. Ein Rücksetzimpuls wird in $T_4$ ebenfalls nicht gebildet, weil das Signal $S_3$ länger als der Zeitabschnitt $T_4$ ist.

Am Anfang des Zeitabschnittes $T_5$ wird nur die Kippstufe 3 durch $I_1$ neu getriggert. Erfolgt nun beim Eintreffen des Taktsignals $I_1$ die Abfragung der Signalpegel $S_2$ und $S_3$, so ist der Ausgang der Kippstufe 2 wegen ihrer Rückfallzeit $\tau_2$ in die stabile Ruhelage "zurückgekippt", und in dem Speicherteil mit dem Eingang $E_1$ wird Signalpegel 0 gespeichert. Der Ausgang $A_1$ behält sein Niveau, während sich Niveau von $A_2$ verändert, die Kippstufe 3 wird erneut regetriggert.

In dem folgenden Zeitabschnitt $T_6$ wird der gleiche Ist-wert der Durchflußmenge wie anfangs erfaßt, und der Impulsgeber G liefert das gleiche Signal $S_G$ wie im Zeitabschnitt $T_1$, das nun durch den Signal-Auswerter A zu wiederum dem gleichen zeitlichen Ausgangssignalverlauf wie in $T_1$ verarbeitet wird.

-9-

Bei der Signalverarbeitung mittels des Auswerters A ist wesentlich, daß bei den Kippstufen 2 und 3 die Rückkippzeiten unterschiedlich lang sind und daß mit Hilfe der Kippstufe 4 ein Rücksetzimpuls dann erzeugt wird, wenn die zeitlichen Abstände der Impulssignale $S_G$ (Zeitabschnitte T) länger als die Rückkippzeit $\tau_3$ der Kippstufe 3 sind, und wenn die Impulssignale $S_G$ ganz fehlen.

Die Erfindung ist über das obige Ausführungsbeispiel hinaus allgemein anwendbar bei Einrichtungen zur Folgesteuerung bei der Zuführung einer Leistung in einen Energiespeicher, aus dem Energie nach vorgegebenen Raten entnommen wird. Sie ist ferner für Überwachungsaufgaben unter Verwendung mechanisch-elektrischer Wandler einsetzbar, also Überwachung mechanisch-dynamischer Größen, wie beispielsweise Drehzahlüberwachungen.

Patentanspruch

Einrichtung zur Folgesteuerung einer einem fließenden Medium zugeführten Heizleistung in Abhängigkeit von einer wählbar vorzugebenden Durchflußmenge des Mediums zur Einstellung einer gewünschten Temperatur, mit einem die Durchflußmenge erfassenden hydraulisch-elektrischen Wandler und einem (elektrisch) nachgeordneten Impulsgeber, dessen erzeugte Impulse zu elektrischen Steuerbefehlen für die Steuerung der Heizleistung verarbeitet werden,
dadurch gekennzeichnet,
daß der Impulsgeber (G) ein Signal ($S_G$) mit einer der Durchflußmenge entsprechenden Periodendauer erzeugt, durch das als Eingangssignal eine erste monostabile Kippstufe (1) eines Signal-Auswerters (A) angesteuert wird, die einen jeweils mit einer hinteren Flanke des Eingangssignals beginnenden Rechteckimpuls ($I_1$) mit festgelegter kurzer Impulsdauer erzeugt, durch den eine zweite und eine dritte, je retriggerbare, monostabile Kippstufe (2) und (3) getriggert werden, welche unterschiedlich lange Rückkippzeiten ($\tau 2$) und ($\tau 3$), $\tau 2 < \tau 3$, haben und, jeweils wiederum mit der hinteren Flanke des Rechteckimpulses beginnend, rechteckförmige Signale ($S_2$) und ($S_3$) mit entsprechender Signaldauer erzeugen, die den Dateneingängen von zwei elektronischen Speichern (5) (Dual-Speicher) getrennt zugeführt sind und durch die vordere Impulsflanke des Rechteckimpulses ($I_1$) für die Dauer einer Periode gespeichert werden, während durch das Signal der Kippstufe (3) mit der längeren Rückkippzeit ($\tau 3$) bei einer Periodendauer $> (\tau 3)$ eine vierte monostabile Kippstufe (4) des Impulssignal-Auswerters (A) getriggert wird, die einen mit der hinteren Flanke des Signals ($S_3$) beginnenden kurzen Rechteckimpuls ($I_4$) erzeugt, der einem gemeinsamen Rücksetzeingang (R) der elektronischen Speicher (5) zugeführt ist, und daß die

-/-

-11-

Speicher (5) Ausgangssignale $(S_{51})$, $(S_{52})$ erzeugen,
die jedes für sich durch Verstärker (61) bzw. (62)
in elektrische Steuerbefehle umgewandelt werden.

**Fig. 1**

# Fig. 2

Europäisches Patentamt

**EUROPÄISCHER RECHERCHENBERICHT**

0029197

Nummer der Anmeldung
EP 80 10 6926

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | <u>US - A - 3 815 813</u> (J. CHARRON)<br>* Spalte 1, Zeile 64 bis Spalte 3, Zeile 13; Abbildungen 1-3 * | Einziger | G 05 D 23/19<br>F 24 H 1/10 |
| A | <u>DE - A - 1 954 987</u> (SIEMENS)<br>* Seite 2, Zeile 21 bis Seite 3, Zeile 13; Abbildung * | Einziger | |

RECHERCHIERTE SACHGEBIETE (Int. Cl.³)

G 05 D 23
F 24 H 1
F 24 H 9

Der vorliegende Recherchenbericht wurde für alle Patentansprüche erstellt.

| Recherchenort | Abschlußdatum der Recherche | Prüfer |
|---|---|---|
| Den Haag | 25-02-1981 | HELOT |

EPA form 1503.1   06.78